# EUROPEAN PATENT APPLICATION

(11) **EP 2 863 717 A2**
(43) Date of publication of application: **22.04.2015**
(21) Application number: 14160523.8
(22) Date of filing: 18.03.2014
(51) Int. Cl.: H05B 37/02

(54) **Power measurement system, method of synchronizing power measurement device information and method of displaying consumed power**

(30) Priority: 20.09.2013 JP 2013195948
(71) Applicant: Toshiba Lighting & Technology Corporation, Yokosuka-shi Kanagawa 237-8510 (JP)
(72) Inventor: Nishigaki, Hidenori, Kanagawa, 237-8510 (JP); Takahashi, Kenji, Kanagawa, 237-8510 (JP); Yamamoto, Hisashi, Kanagawa, 237-8510 (JP); Takahashi, Junko, Kanagawa, 237-8510 (JP)
(74) Representative: Willquist, Sofia Ellinor

(57) **Abstract**

A lighting system (1) according to an embodiment includes a plurality of lighting devices (9 and 10), and a host device (3) which controls the lighting devices (9 and 10). In addition, the lighting system (1) collects information according to a place where the lighting system (1) is installed. Then, the lighting system (1) performs, according to the collected information, a gradation control which turns on lighting devices at a periphery area which are installed on the periphery of lighting devices at a central area that are instructed to be turned on at a degree of dimming which is lower than a degree of dimming of the lighting devices at the central area.

## Description

### FIELD

Embodiments described herein relate generally to a lighting system and a method of controlling the lighting system.

### BACKGROUND

In recent years, a lighting system which enables individually controlling a plurality of lighting apparatuses is known. As an example of control performed by the lighting system, a gradation control is known which reduces a sense of insecurity of a user caused by a rapid change in illuminance by turning on the lighting device accepting a turning-on instruction at a predetermined degree of dimming and turning on a turning-on device installed around the turned-on lighting device at a degree of dimming lower than a predetermined illuminance. However, the lighting system of the related art has a disadvantage that a user has to set whether to perform the gradation control or not when necessary.

An object of an embodiment is to provide a lighting system which automatically performs the gradation control of the lighting apparatus when necessary.

### BRIEF DESCRIPTION OF THE DRAWINGS

Fig. 1 is a diagram which shows the configuration example of a lighting system according to a first embodiment.
Fig. 2 is a diagram which describes an example of processing by which the lighting system according to the first embodiment turns on a lighting device.
Fig. 3 is a diagram which describes an example of a gradation control performed by the lighting system according to the first embodiment.
Fig. 4 is a diagram which describes an example of processing by which the lighting system according to the first embodiment changes a degree of dimming of the lighting device.
Fig. 5 is a diagram which describes an example of processing of changing the number of lighting devices which are turned on by the lighting system according to the first embodiment.
Fig. 6 is a diagram which describes the functional configuration of a host device according to the first embodiment.
Fig. 7 is a diagram which describes an example of gradation control data according to the first embodiment.
Fig. 8 is a diagram which describes a configuration example of the lighting device according to the first embodiment.
Fig. 9 is a flowchart which shows a procedure of processing performed by the lighting system according to the first embodiment.

### DETAILED DESCRIPTION

A lighting system 1 according to an embodiment to be described below includes a plurality of lighting devices 9 and 10, and a host device 3 which performs a control on the lighting devices 9 and 10. In addition, the lighting system 1 includes a collection unit 16 and a control unit 18. The collection unit 16 collects information according to any place. Moreover, the control unit 18 performs, according to information collected by the collection unit 16, a peripheral control which turns on a second lighting device installed on the periphery of a first lighting device which is instructed to be turned on at the degree of dimming lower than the degree of dimming of the first lighting device.

In addition, the collection unit 16 according to the embodiment to be described below collects time information which indicates a time in a place in which the lighting system 1 is installed. Furthermore, the control unit 18 performs the peripheral control according to the time information collected by the collection unit 16.

In addition, the collection unit 16 according to the embodiment to be described below collects illuminance information which indicates brightness of an external light. Moreover, the control unit 18 performs the peripheral control according to the illuminance information collected by the collection unit 16.

The lighting system 1 according to the embodiment to be described below includes a plurality of measurement units 8 which measure illuminance of different places. Furthermore, the collection unit 16 collects illuminance information which indicates the illuminance measured by each measurement unit 8. In addition, the control unit 18 performs the peripheral control according to a plurality of pieces of illuminance information collected by the collection unit 16.

The collection unit 16 according to the embodiment to be described below collects information on the number of people which indicates the number of people in a region where the first lighting device is installed. Additionally, the control unit 18 performs the peripheral control according to the information on the number of people collected by the collection unit 16.

Furthermore, the collection unit 16 according to the embodiment to be described below collects region information which indicates the size of the region where the first lighting device is installed. Moreover, the control unit 18 performs the peripheral control according to the region information collected by the collection unit 16.

The control unit 18 according to the embodiment to be described below changes the degree of dimming of the first lighting device or the second lighting device according to the information collected by the collection unit 16.

In addition, the control unit 18 according to the embodiment to be described below changes the number of the second lighting devices which are to be turned on according to the information collected by the collection unit 16.

Hereinafter, the lighting system 1 according to the embodiment will be described referring to drawings. Like reference numerals are given to like elements, and overlapping description will be omitted in the embodiment.

### First Embodiment

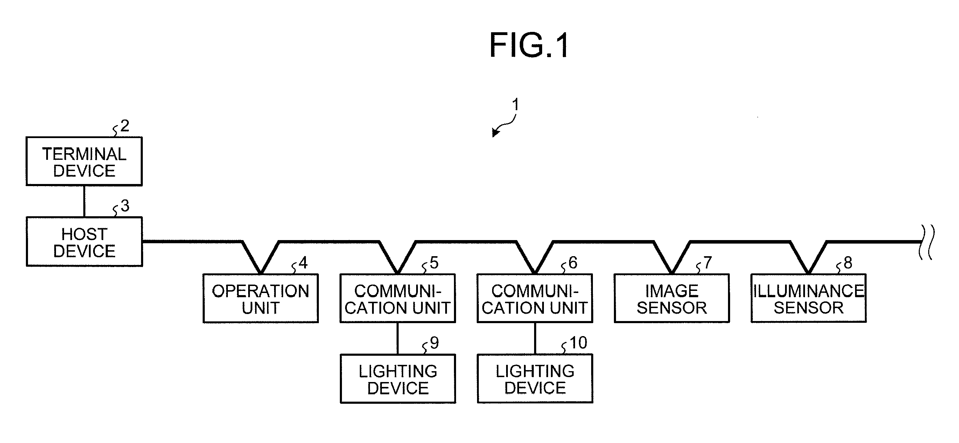

First, using Figs. 1 to 9, an example of the lighting system according to the first embodiment will be described.

An example of the configuration of the lighting system 1

Fig. 1 is a diagram which shows the configuration example of a lighting system according to the first embodiment. The lighting system 1 shown in Fig. 1 is a system which controls and monitors a lighting device installed in a house, an office, and the like. For example, the lighting system 1, in some cases, obtains information on the environment in which the lighting device is installed using a sensor or the like, and controls the lighting device based on the obtained information in a T/Flecs (registered trademark) method and the like.

In the lighting system 1 shown in Fig. 1, a terminal device 2 is connected to the host device 3, and the host device 3, an operation unit 4, a plurality of communication units 5 and 6, an image sensor 7, and an illuminance sensor 8 are connected to each other. In addition, the communication unit 5 is connected to the lighting device 9, and the communication unit 6 is connected to the lighting device 10. Moreover, the lighting devices 9 and 10 are lighting units. The communication unit 6 has the same function as the communication unit 5, such that the description thereof will be omitted below. Additionally, the lighting device 10 has the same function as the lighting device 9, such that the description thereof will be omitted below.

In addition, the number of the operation units 4, the communication units 5 and 6, the lighting devices 9 and 10, the image sensors 7, and the illuminance sensors 8 included in the lighting system 1 shown in Fig. 1 is not more than an example, and may be appropriately changed according to the configuration of the lighting system 1. Moreover, the communication unit 5 may be connected to a plurality of lighting devices.

The terminal device 2 is a terminal device which performs a setting of the lighting system 1, such as a Personal Computer (PC), a tablet, a portable terminal device. In addition, the terminal device 2 performs various types of settings on the lighting system 1 for the host device 3 by an operation of a user. For example, the terminal device 2 sets correspondence between the lighting devices included in the lighting system 1 and an operation unit accepting a control instruction on the lighting device. When the operation unit 4 and the lighting device 9 are correlated with each other, the lighting system 1 performs turning-on or turning-off of the lighting device 9 according to the control instruction accepted by the operation unit 4.

The terminal device 2 sets the size of a room where the lighting system 1 is installed or layout information of the room where the lighting system 1 is installed with respect to the host device 3. For example, when the room where the lighting system 1 is installed is divided into a plurality of regions using a partition and the like, the terminal device 2 sets layout information for the host device 3, which indicates the layout of the partition.

The host device 3 is a control device which performs a control on the lighting system 1. For example, if the operation unit 4 accepts an operation instruction from a user when the operation unit 4 and the lighting device 9 are correlated with each other, the host device 3 outputs a control signal which controls the lighting device 9 according to the operation instruction. The host device 3 can use any type of control method so as to control the lighting apparatus. For example, the host device 3 outputs a control signal corresponding to various control methods such as T/Flecs (registered trademark), Digital Addressable Lighting Interface (DALI), Pulse Width Modulation (PWM), and the like so as to control the lighting apparatus.

The operation unit 4 accepts a control instruction on the lighting devices 9 and 10 included in the lighting system 1 from a user. For example, the operation unit 4 is an operation panel of the lighting devices 9 and 10, and when accepting a control instruction of turning-on, turning-off, or a change in the degree of dimming of the lighting devices 9 and 10 from a user, the operation unit 4 outputs the accepted control instruction which indicates turning-on, turning-off, a change in the degree of dimming, a change in color, and the like to the host device 3.

The communication unit 5 is a relay device which relays a communication between the host device 3 and the lighting device 9. For example, when receiving a control signal which indicates a control on the lighting device 9 from the host device 3, the communication unit 5 outputs the received control signal to the lighting device 9. In addition, when receiving a response signal which indicates a completion of a control and a notification signal which indicates a state of the lighting device 9 from the lighting device 9, the communication unit 5 transmits the received response signal and notification signal to the host device 3. As a result, the host device 3 can confirm the completion of the control on the lighting device 9 and the dimming state of the lighting device 9.

The image sensor 7 is an image sensor which image-captures a region where the lighting system 1 is installed, and is an imaging device such as a Complementary Metal-Oxide Semiconductor (CMOS), a Charge-Coupled Device (CCD) image sensor and the like. The image sensor 7, at a predetermined time such as when receiving an imaging instruction from the host device 3, continuously captures a region where the lighting system 1 is installed during a predetermined time, analyzes the captured video data, determines presence or absence of people and the number of people, and outputs a result of the determination to the host device 3.

The illuminance sensor 8 is a sensor which obtains illuminance of the region where the lighting system 1 is installed. For example, the illuminance sensor 8 is installed in the vicinity of a window installed in the room where the lighting system 1 is installed, and measures illuminance of an external light entering the room where the lighting system 1 is installed. Then, the illuminance sensor outputs illuminance information which indicates the measured illuminance to the host device 3.

For example, the lighting device 9 is a lighting device installed in a house, an office, and the like, and is a replaceable lighting device. For example, the lighting device 9 includes a lighting apparatus such as a Light Emitting Diode (LED), and a power supply control unit which controls the lighting apparatus, and performs turning-on, turning-off, changing the illuminance of the lighting apparatus, changing the color of the lighting apparatus and the like by the power supply control unit's control on the lighting apparatus according to the control signal received from the communication unit 5.

An example of a control on the lighting device using the lighting system

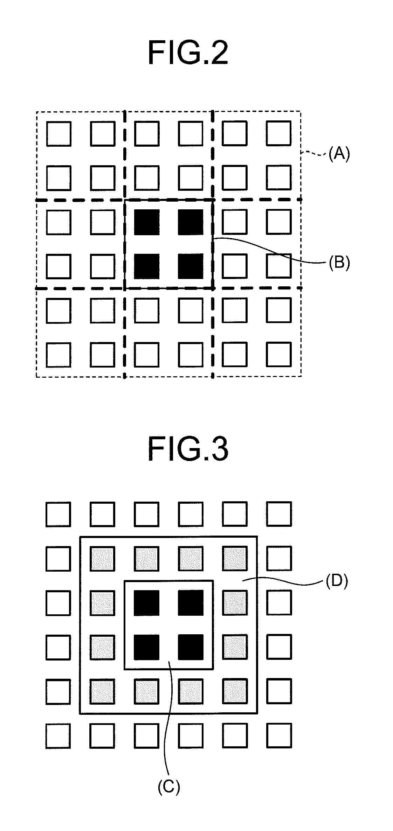

Next, using Figs. 2 and 3, an example of a gradation control performed by the lighting system 1 will be described.

Fig. 2 is a diagram which describes an example of processing by which the lighting system according to the first embodiment turns on a lighting device. In the example shown in Fig. 2, as an example of a layout which installs the lighting devices, an example of installing a total of 36 lighting devices by installing six lighting devices in an X-axis direction and six lighting devices in a Y-axis direction is described. In addition, in the example shown in Fig. 2, lighting devices which are turned off are indicated by a white square and lighting devices which are turned on are indicated by a black square.

For example, the lighting system 1, as shown in (A) of Fig. 2, sets a total of four lighting devices as a group, which include two lighting devices in the X-axis direction and two lighting devices in the Y-axis direction, and correlates each group of lighting devices with one operation unit. Then, when an operation unit correlated with a group of lighting devices shown in (B) of Fig. 2 accepts a turning-on instruction from a user, the lighting system 1 turns on four lighting devices shown in (B) of Fig. 2.

Here, when turning on only the lighting devices shown in (B) of Fig. 2 when an external light is dark like nighttime and the like, illuminance of a range which is lit and illuminance of a range which is not lit rapidly change. Therefore, there is a possibility of giving a sense of loneliness and insecurity to a user. Thus, the lighting system 1 performs the gradation control which turns on the second lighting device, installed around the first lighting device which is turned on, at the degree of dimming which is lower than that of the first lighting device.

Fig. 3 is a diagram which describes an example of the gradation control performed by the lighting system according to the first embodiment. In Fig. 3, in the same manner as in Fig. 2, an example of installing a total of 36 lighting devices by installing six in the X-axis direction and six in the Y-axis direction is described, and lighting devices which are turned on are indicated by squares in color corresponding to illuminance. For example, when lighting devices of the central area shown in (C) of Fig. 3 are turned on, the lighting system 1 turns on lighting devices adjacent to the lighting devices which are turned on, that is, lighting devices at the periphery area shown in (D) of Fig. 3 at the degree of dimming which is lower than that of the lighting devices at the central area shown in (C) of Fig. 3. For this reason, the lighting system 1 reduces a rapid change in illuminance, thereby reducing a sense of loneliness and insecurity of a user.

Here, in a lighting system of the related art, a user has to set whether to perform the gradation control or not when necessary through the terminal device 2, and there is a trouble in enabling or disabling the gradation control. Thus, the host device 3 included in the lighting system 1 performs the following processing. First, the host device 3 collects information according to a place lit by the lighting system 1, that is, a place where the lighting system 1 is installed. Then, the host device 3 performs the gradation control according to the collected information.

Accordingly, the lighting system 1 can perform the gradation control when necessary. For example, when brightness of a range where the lighting device is not turned on is dark like nighttime and the like, there is a rapid change in illuminance in a range where the lighting device is turned on and a range where the lighting device is not turned on. Thus, the lighting system 1 collects time information which indicates a current time, and when a time indicated by the collected time information is in a time zone of nighttime, the lighting system performs the gradation control. As a result, the lighting system 1, when necessary, automatically performs the gradation control, such that troubles in setting can be eliminated and a sense of insecurity and loneliness of a user can be reduced. An example of information collected by the lighting system 1

Here, the lighting system 1 may perform the gradation control according to any information if the information accords with a place where the lighting system 1 is installed. Thus, in the following description, an example of information collected by the lighting system 1 will be described. The embodiment is not limited to the following exemplification, and the gradation control may be performed according to any information if the information is material for determining whether to perform the gradation control or not.

For example, the host device 3 collects the time in a place where the lighting system 1 is installed. Then, the host device 3 performs the gradation control when the time is included in a time zone of evening (for example, from 4 p.m. to 7 p.m.), a time zone of nighttime (for example, from 7 p.m. to 10 p.m.), a time zone of the middle of the night (for example, 10 p.m. to 4 a.m.), or a time zone of early morning (for example, 4 a.m. to 7 a.m.). On the other hand, the host device 3 does not perform the gradation control but performs a normal control when the time is included in a time zone of morning (for example, from 7 a.m. to 10 a.m.), or a time zone of daytime (that is, 10 a.m. to 4 p.m.). By performing such processing, the lighting system 1 can perform the gradation control according to a time schedule.

In addition, for example, the host device 3 collects illuminance information, which indicates the illuminance of an external light entering a room where the lighting system 1 is installed, from the illuminance sensor 8. Then, when illuminance indicated by the collected illuminance information is lower than a predetermined threshold, the host device 3 performs the gradation control, and when the illuminance indicated by the illuminance information is higher than the predetermined threshold, the host device does not perform the gradation control but performs a normal control. By performing such processing, when an external light is dark, when turning on a portion of the lighting device, and when illuminance rapidly changes, the lighting system 1 performs the gradation control, thereby reducing a rapid change in the illuminance. As a result, a sense of insecurity and loneliness of a user can be reduced. In addition, since the surroundings become bright compared to a case of turning on only a portion of the lighting device, it is possible to make a space feel bright even with the same desk surface illuminance.

Moreover, for example, an image sensor 7 specifies a moving object in an obtained image, and transmits the number of the specified objects to the host device 3. The host device 3 calculates the number of people in the room where the lighting system 1 is installed based on the number of the specified objects received from the image sensor 7. That is, the host device 3 collects information which indicates the number of people in the room where the illumination system 1 is installed. Then, when the calculated number of people is less than a predetermined threshold, the host device 3 performs the gradation control, and when the calculated number of people is greater than the predetermined threshold, the host device 3 does not perform the gradation control but performs the normal control. By performing the processing, the lighting system 1 can reduce a sense of insecurity and loneliness of a user by performing the gradation control when people are fewer.

Furthermore, for example, the host device 3 collects information which indicates the size of a region lit by the lighting device which is turned on from layout information. For example, the host device 3 identifies the size of the room where the lighting system 1 is installed from the layout information set by the terminal device 2 when obstacles such as a partition are not present in the room where the lighting system 1 is installed. In addition, the host device 3 identifies the size of a region where the lighting device which is turned on is installed when the room where the lighting system 1 is installed is divided using obstacles such as a partition. Then, when the identified size of the region is greater than a predetermined threshold, the host device 3 performs the gradation control, and when the identified size of the region is smaller than the predetermined threshold, the host device does not perform the gradation control but performs a normal control. Therefore, the lighting system 1 can determine whether to perform the gradation control or not according to the size of the region lit by the lighting device which is turned on.

The lighting system 1 may perform the gradation control according to a plurality of pieces of information. For example, when illuminance of an external light is equal to or less than a predetermined threshold and the number of people in the room where the lighting device which is turned on is installed are equal to or less than a predetermined threshold, the lighting system 1 may perform the gradation control. In addition, when a current time is included in the time zone of nighttime and the number of people in the room where the lighting device which is turned on is installed is equal to or less than the predetermined threshold, the lighting system 1 may perform the gradation control. Moreover, when the current time is included in the time zone of daytime and the illuminance of the external light is equal to or less than the predetermined threshold, the lighting system 1 may perform the gradation control. In this manner, the lighting system 1 performs the gradation control according to a plurality of pieces of information, such that it is possible to effectively perform the gradation control.

An example of the gradation control performed by the lighting system 1

In addition, the lighting system 1 may change the degree of dimming of a lighting device which is an object of the gradation control according to the collected information. More specifically, the lighting system 1 may change the degree of dimming of lighting devices at a periphery area thereof according to the collected information. Furthermore, the lighting system 1 may change not only the degree of dimming of the lighting devices at the periphery area but also the degree of dimming of lighting devices at the central area according to the collected information.

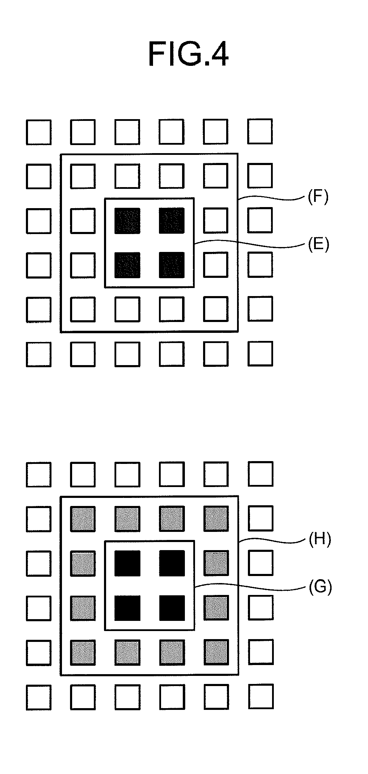

For example, Fig. 4 is a diagram which describes an example of processing by which the lighting system according to the first embodiment changes the degree of dimming of the lighting device. In an example shown in Fig. 4, an example of processing of changing the degree of dimming of the lighting device which is an object of the gradation control according to brightness of an external light is described. For example, the lighting system 1 sets the degree of dimming of the lighting devices at the central area which are instructed to be turned on to be 50 percent as shown in (E) of Fig. 4 when the external light is darker than a first threshold. In addition, as shown in (F) of Fig. 4, the lighting system 1 sets the degree of dimming of the lighting devices at the periphery area which are laid out around the central area to be 10 percent.

Moreover, when the external light is darker than a second threshold which is lower than the first threshold, as shown in (G) of Fig. 4, the lighting system 1 sets the degree of dimming of the lighting devices at the central area to be 70 percent. In addition, as shown in (H) of Fig. 4, the lighting system 1 sets the degree of dimming of the lighting devices at the periphery area to be 20 percent.

The lighting system 1 may change the degree of dimming of a lighting device which is an object of the gradation control according to not only the brightness of an external light, but also a time zone in which an obtained time is included, the number of people in a place where the lighting system 1 is installed, the size of a region lit by the lighting devices at the central area, and the like. By performing the processing, the lighting system 1 can perform the gradation control which effectively reduces the sense of insecurity and loneliness of a user.

Moreover, the lighting system 1 may change the number of lighting devices which are objects of the gradation control according to the collected information. More specifically, the lighting system 1 may change the number of lighting devices at the periphery area according to the collected information.

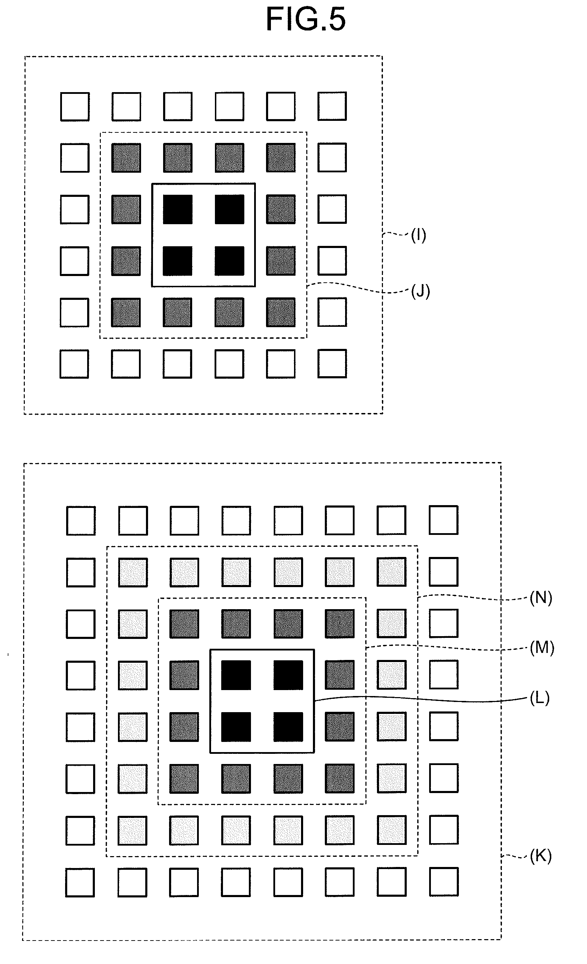

For example, Fig. 5 is a diagram which describes an example of processing of changing the number of lighting devices which are turned on by the lighting system according to the first embodiment. In an example shown in Fig. 5, an example of processing of changing the number of the second lighting devices according to the size of a region lit by the first lighting device is described. For example, in an example shown in (I) of Fig. 5, when the lighting devices at the central area are turned on, the lighting system 1 turns on the lighting devices adjacent to the central area as shown in (J) of Fig. 5.

On the other hand, in an example shown in (K) of Fig. 5, a region lit by the lighting devices at the central area shown in (L) of Fig. 5 is wider than a region shown in (I) of Fig. 5. In this case, the lighting system 1 turns on lighting devices at a first periphery area adjacent to the lighting devices at the central area as shown in (M) of Fig. 5, and turns on lighting devices at a second periphery area adjacent to the first periphery area as shown in (N) of Fig. 5. That is, the lighting system 1 expands the periphery area and increases the number of lighting devices at the periphery area which are turned on at the degree of dimming lower than that of the lighting devices at the central area. Moreover, the lighting system 1 sets the degree of dimming of the lighting devices at the first periphery area to be lower than that of the lighting devices at the central area, and sets the degree of dimming of the lighting devices at the second periphery area to be lower than that of the lighting devices at the first periphery area.

The lighting system 1 may change the number of lighting devices to be turned on according to not only the size of a region lit by the lighting devices at the central area, but also a time zone in which an obtained time is included, the brightness of an external light, the number of people in a place where the lighting system 1 is installed, and the like. In this manner, since the lighting system 1 changes the number of the second lighting devices according to the collected information, it is possible to perform the gradation control which effectively reduces the sense of insecurity and loneliness of a user.

### An example of the configuration of the host device 3

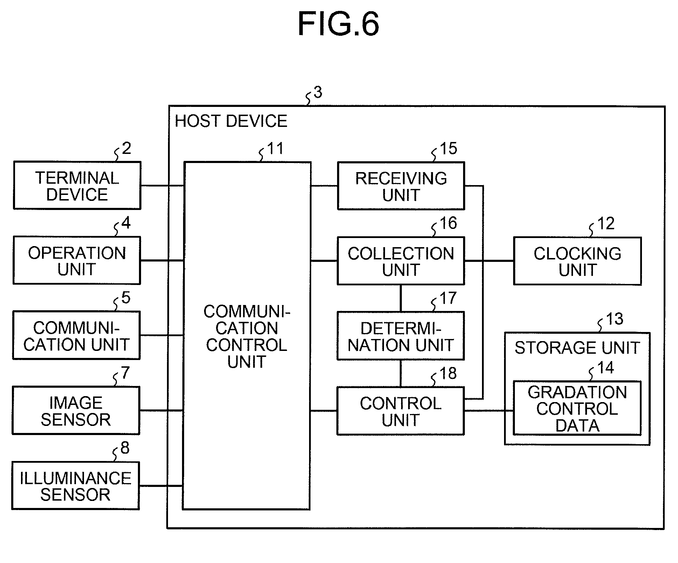

Next, using Fig. 6, an example of the functional configuration of the host device 3 will be described so as to exhibit the above-mentioned function. Fig. 6 is a diagram which describes the functional configuration of a host device according to the first embodiment. As shown in Fig. 6, the host device 3 includes a communication control unit 11, a clocking unit 12, a storage unit 13, a receiving unit 15, the collection unit 16, a determination unit 17, and the control unit 18. In addition, the storage unit 13 stores gradation control data 14.

### An example of gradation control data 14

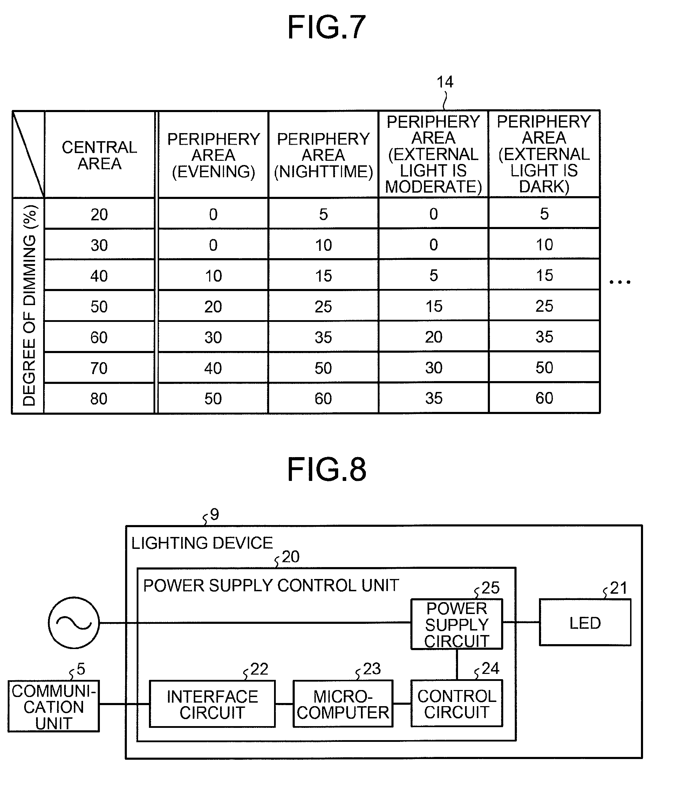

First, information stored in the gradation control data 14 stored by the storage unit 13 will be described. In the gradation control data 14, when performing the gradation control, information which indicates the degree of dimming set for the lighting devices at the periphery area is stored. Hereinafter, using Fig. 7, an example of information stored in the gradation control data 14 will be described.

Fig. 7 is a diagram which describes an example of gradation control data according to the first embodiment. In an example shown in Fig. 7, the degree of dimming set for the lighting devices at the central area and the degree of dimming set for the lighting devices at the periphery area are described by percentage in which the maximum output of the lighting devices is set to be 100 percent. In addition, an example of storing the degree of dimming set for the lighting devices at the periphery area in correlation with the degree of dimming "20", "30", "40", "50", "60", "70", or "80" set for the lighting devices at the central area is described in Fig. 7. In the following description, there is a case where the degree of dimming set for the lighting devices at the periphery area is described as dimming data.

As shown in Fig. 7, in the gradation control data 14, dimming data which are different per time zone and per the brightness of an external light are stored as the degree of dimming set for the lighting devices at the periphery area when performing the gradation control. For example, in an example shown in Fig. 7, as dimming data set for the lighting devices at the periphery area when the time zone is evening, "0", "0", "10", "20", "30", "40", and "50" are stored in the gradation control data 14 in correlation with each degree of dimming set for the lighting devices at the central area.

In addition, as dimming data set for the lighting devices at the periphery area when the time zone is nighttime, "5", "10", "15", "25", "35", "50", and "60" are stored in the gradation control data 14 in correlation with each degree of dimming set for the lighting devices at the central area. Moreover, as dimming data set for the lighting devices at the periphery area when the brightness of an external light is moderate, "0", "0", "5", "15", "20", "30", and "35" are stored in the gradation control data 14 in correlation with each degree of dimming set for the lighting devices at the central area. Furthermore, as dimming data set for the lighting devices at the periphery area when the brightness of an external light is dark, "5", "10", "15", "25", "35", "50", and "60" are stored in the gradation control data 14 in correlation with each degree of dimming set for the lighting devices at the central area.

The gradation control data 14 shown in Fig. 7 are only an example, and do not limit the embodiment. That is, in the gradation control data 14, other dimming data according to information on a place where the lighting system 1 is installed such as time information, illumination information, information on the number of people, layout information are stored. Moreover, in the gradation control data 14, dimming data for effectively performing the gradation control, such as dimming data according to the time information and the illuminance information, dimming data according to the time information, the illuminance information, and the information on the number of people, are stored according to a plurality of pieces of information.

### An example of processing performed by each unit included in the host device 3.

Returning back to Fig. 6, the description will be continued. The communication control unit 11 is a control unit which controls a communication between the host device 3 and the terminal device 2, the operation unit 4, the communication unit 5, the image sensor 7, and the illuminance sensor 8. The communication control unit is, for example, an interface. More specifically, when receiving layout information from the terminal device 2, the communication control unit 11 outputs the received layout information to the collection unit 16. In addition, when receiving an operation instruction from the operation unit 4, the communication control unit 11 outputs the received operation instruction to the receiving unit 15. Moreover, when receiving a control signal from the control unit 18, the communication control unit 11 outputs the received control signal to the communication unit 5.

In addition, when receiving an operation signal of the image sensor 7 or the illuminance sensor 8 from the collection unit 16, the communication control unit 11 outputs the received operation signal to the image sensor 7 or the illuminance sensor 8. Moreover, when receiving data which are related to the presence or absence of people or the number of people from the image sensor 7, or when receiving illuminance information from the illuminance sensor 8, the communication control unit 11 outputs the received data and illuminance information to the collection unit 16.

The clocking unit 12 is a clock which measures the time of a place where the lighting system 1 is installed.

The receiving unit 15 receives an operation instruction of the lighting devices 9 and 10 which the operation unit 4 accepts from a user. In this case, the receiving unit 15 outputs the received operation instruction to the control unit 18.

The collection unit 16 collects information on a place where the lighting system 1 is installed. For example, the collection unit 16 collects time information which indicates a current time from the clocking unit 12. In addition, the collection unit 16 outputs an operation signal of the image sensor 7 to the communication control unit 11, and receives data related to the number of people, which are collected by the image sensor 7. Then, the collection unit 16 generates information on the number of people which indicates the number of people in the room, where the lighting system 1 is installed, from the received data related to the number of people.

Moreover, the collection unit 16 outputs an operation signal of the illuminance sensor 8 to the communication control unit 11, and collects illuminance information, which indicates the brightness of an external light, from the illuminance sensor 8. Furthermore, the collection unit 16 collects layout information from the terminal device 2. Then, the collection unit 16 outputs the time information, the information on the number of people, the illuminance information, and the layout information which are collected to the determination unit 17.

The determination unit 17 receives information on a place where the lighting system 1 is installed from the collection unit 16. Then, the determination unit 17 determines whether to perform the gradation control or not according to the information received from the collection unit 16. In addition, when determining to perform the gradation control, the determination unit 17 determines which dimming data to use among the dimming data stored in the gradation control data 14 according to the information received from the collection unit 16. Afterward, the determination unit 17 notifies the control unit 18 of each determination result.

### An example of processing performed by the determination unit 17

Hereinafter, an example of processing by which the determination unit 17 determines whether to perform the gradation control or not and which dimming data to use according to the time information and the illuminance information will be described. The determination result of the determination unit 17 to be described below is only an example, and does not limit the embodiment. That is, the determination unit 17, according to any policy, can determine whether to perform the gradation control or not and which dimming data to use according to information on a place where the lighting system 1 is installed.

For example, the determination unit 17 determines not to perform the gradation control when a time indicated by the received time information is in the time zone of morning or in the time zone of daytime, and when the brightness of an external light indicated by the illuminance information is brighter than the first threshold. Then, the determination unit 17 notifies the control unit 18 of not performing the gradation control.

In addition, when the time indicated by the received time information is in the time zone of evening or nighttime, the determination unit 17 determines to perform the gradation control, and notifies the control unit 18 of performing the gradation control. Moreover, the determination unit 17 notifies the control unit 18 to use the dimming data set for the lighting devices at the periphery area in the time zone of evening, or the dimming data set for the lighting devices at the periphery area in the time zone of nighttime according to the time indicated by the received time information.

Moreover, regardless of the time indicated by the received time information, when the brightness of an external light indicated by the illuminance information is darker than the first threshold, but is brighter than the second threshold which is lower than the first threshold, the determination unit 17 determines to perform the gradation control, and notifies the control unit 18 of performing the gradation control. Furthermore, the determination unit 17 notifies the control unit 18 to use the dimming data set for the lighting devices at the periphery area when the brightness of an external light is moderate.

In addition, when the brightness of an external light indicated by the illuminance information is darker than the second threshold, the determination unit 17 determines to perform the gradation control and notifies the control unit 18 of performing the gradation control. Moreover, when the brightness of an external light is dark, the determination unit 17 notifies the control unit 18 to use the dimming data set for the lighting devices at the periphery area.

### An example of processing performed by the control unit 18

The control unit 18 performs the gradation control according to information on a place where the lighting system 1 is installed. For example, the control unit 18 performs the following processing when receiving a notification of performing the gradation control from the determination unit 17. First, the control unit 18 receives a notification which indicates which dimming data to use among the dimming data stored in the gradation control data 14 from the determination unit 17. In addition, the control unit 18 reads the dimming data indicated by the received notification from the gradation control data 14.

Moreover, when receiving a control instruction which instructs turning-on or a change in the degree of dimming from the receiving unit 15, the control unit 18 discriminates lighting devices controlled by the received control instruction, that is, the lighting devices at the central area, and specifies lighting devices laid out around the discriminated lighting devices at the central area, that is, the lighting devices at the periphery area. Furthermore, the control unit 18 specifies the degree of dimming correlated with the degree of dimming which is set for the lighting devices at the central area by the received control instruction from the dimming data read from the gradation control data 14. Then, the control unit 18, according to the control instruction, generates a control signal which controls the lighting devices at the central area and a control signal which controls the degree of dimming specified for the lighting devices at the periphery area, and outputs each generated control signal to the communication control unit 11.

For example, the control unit 18 receives a control instruction of setting the degree of dimming of the lighting device 9 to be "50 percent" from the receiving unit 15. In addition, the control unit 18 receives a notification of performing the gradation control and a notification of using the dimming data set for the lighting devices at the periphery area when the brightness of an external light is moderate from the determination unit 17. In this case, the control unit 18 specifies a lighting device adjacent to the lighting device 9, for example, the lighting device 10. Next, the control unit 18 specifies the degree of dimming of "15 percent" correlated with the degree of dimming at the central area of "50 percent" among the dimming data notified by the determination unit 17. Then, the control unit 18 outputs a control signal which sets the degree of dimming of the lighting device 9 to be "50 percent" and a control signal which sets the degree of the dimming of the lighting device 10 to be "15 percent".

The control unit 18 performs the following processing independently from the above-described processing. First, the control unit 18 inquires each of the communication units 5 and 6 of a turned-on state of the lighting devices 9 and 10, and thereby specifies lighting devices which are turned on and the degree of dimming set for the lighting devices among lighting devices included in the lighting system 1. Next, the control unit 18 sets the specified lighting devices as lighting devices at the central area, and specifies the lighting devices at the periphery area which are installed around the lighting devices at the central area. Moreover, the control unit 18 specifies the degree of dimming set for the lighting devices at the periphery area from the degree of dimming set for the lighting devices at the central area. Then, the control unit 18 outputs a control signal which controls the specified lighting devices at the periphery area at the specified degree of dimming to the communication control unit 11.

On the other hand, when receiving a control instruction which indicates turning-off from the receiving unit 15, the control unit 18 generates the control signal which turns off the lighting devices at the central area and the lighting devices at the periphery area, and outputs the generated control signal to the communication control unit 11. In addition, when receiving a notification of not performing the gradation control from the determination unit 17, the control unit 18 generates a control signal which controls a lighting device and outputs the generated control signal to the communication control unit 11 according to the control instruction received from the receiving unit 15.

### An example of the configuration of the lighting device 9

Next, using Fig. 8, a configuration example of the lighting device 9 will be described. Fig. 8 is a diagram which describes a configuration example of the lighting device according to the first embodiment. As shown in Fig. 8, the lighting device 9 includes a power supply control unit 20 and an LED 21. The power supply control unit 20 includes an interface circuit 22, a microcomputer 23, a control circuit 24, and a power supply circuit 25. In addition, a power supply of the power supplied to the LED 21 is connected to the power supply circuit 25.

### An example of interface circuit 22

The interface circuit 22 includes a rectifier circuit which rectifies the control signal received from the communication unit 5, and outputs the control signal rectified using the rectifier circuit to the microcomputer 23. More specifically, the interface circuit 22 rectifies the control signal on a single-pole side so that the microcomputer 23 can identify control content.

### An example of the microcomputer 23

The microcomputer 23 is a micro-controller which exhibits a predetermined function by performing a program prepared in advance, and is realized by an integrated circuit such as Application Specific Integrated Circuit (ASIC), Field Programmable Gate Array (FPGA). In addition, the microcomputer 23 may be realized by a Central Processing Unit (CPU), a Micro Processing Unit (MPU), and the like.

Here, the microcomputer 23 exhibits the following functions by performing a program prepared in advance. First, the microcomputer 23 receives a signal which is rectified by the interface circuit 22. In this case, the microcomputer 23 derives the control content indicated by the received signal and outputs an instruction of performing the derived control content to the control circuit 24 according to a predetermined control method.

### An example of the control circuit 24

The control circuit 24 reflects the control content which is specified by the microcomputer 23 from the control signal in the LED 21. For example, when receiving the control content such as turning-on, turning-off, a change in illuminance, a change in color of a light, and the like of the LED 21 from the microcomputer 23, the control circuit 24 controls the power supply circuit 25 so as to reflect the received control content. Accordingly, the control circuit 24 reflects the control content in the LED 21.

### An example of the power supply circuit 25

The power supply circuit 25 is a circuit which changes the power supplied to the LED 21 according to a control by the control circuit 24. For example, the power supply circuit 25 is supplied with power from the power supply. Then, when receiving a control signal from the control circuit 24, the power supply circuit 25 performs the turning-on, the turning-off, the change in illuminance, and the change in color of a light of the LED 21 by performing a control on an amount of power to be supplied to the LED 21, which is provided from the power supply according to the received control signal.

### An example of a procedure of processing by the host device 3

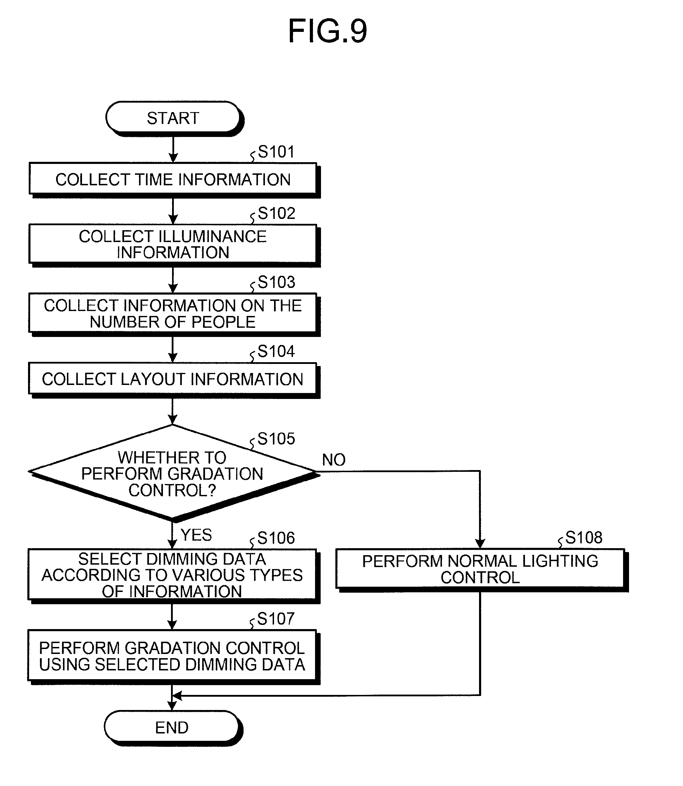

Next, using Fig. 9, the lighting system 1 collects information on a place where the lighting system 1 is installed, the flow of processing of performing the gradation control according to the collected information will be described. Fig. 9 is a flowchart which indicates a procedure of processing performed by the lighting system according to the first embodiment. The host device 3 performs the processing shown in Fig. 9 all the time or at a predetermined time interval.

For example, the lighting system 1 collects time information which indicates the time in a place where the lighting system 1 is installed (Act 101). In addition, the lighting system 1 collects illuminance information which indicates the brightness of an external light of a place where the lighting system 1 is installed (Act 102). Moreover, the lighting system 1 collects information on the number of people which indicates the number of people in a place where the lighting system 1 is installed (Act 103). Furthermore, the lighting system 1 collects layout information which indicates the size of a place where the lighting system 1 is installed (Act 104).

Then, the lighting system 1 determines whether to perform the gradation control or not according to various types of information collected in Acts 101 to 104 (Act 105). In addition, when determining to perform the gradation control (Act 105: Yes), the lighting system 1 selects dimming data to use from the gradation control data 14 according to various types of information collected in Acts 101 to 104 (Act 106).

Then, the lighting system 1 performs the gradation control (Act 107) using the selected dimming data and completes the processing. On the other hand, when determining not to perform the gradation control (Act 105: No), the lighting system 1 performs a normal lighting control (Act 108) and completes the processing.

### Advantages of the first embodiment

As described above, the lighting system 1 includes a plurality of lighting devices 9 and 10, and the host device 3 which perform a control on the lighting devices 9 and 10. In addition, the lighting system 1 collects information according to any place. Then, the lighting system 1 performs the gradation control, which turns on the lighting devices at the periphery area installed on the periphery of the lighting devices at the central area which are instructed to be turned on at the degree of dimming which is lower than the degree of dimming of the lighting devices at the central area, according to the collected information. Therefore, the lighting system 1 can automatically perform the gradation control when necessary.

Moreover, the lighting system 1 collects time information which indicates the time in a place where the lighting system 1 is installed. Then, the lighting system 1 performs the gradation control according to the collected time information. Therefore, the lighting system 1 can automatically perform the gradation control according to a time schedule.

Furthermore, the lighting system 1 collects illuminance information which indicates the brightness of an external light. Then, the lighting system 1 performs the gradation control according to the collected illuminance information. Therefore, the lighting system 1 can automatically perform the gradation control according to the brightness of an external light.

In addition, the lighting system 1 collects information on the number of people which indicates the number of people in a region where the lighting devices at the central area are installed. Then, the lighting system 1 performs the gradation control according to the collected information on the number of people. Therefore, the lighting system 1 can automatically perform the gradation control according to the number of people in the region where the lighting devices at the central area are installed.

Moreover, the lighting system 1 collects layout information which indicates the size of the region where the lighting devices at the central area are installed. Then, the lighting system 1 performs the gradation control according to the collected layout information. Therefore, the lighting system 1 can automatically perform the gradation control according to the size of a region to be lit.

Furthermore, the lighting system 1 changes the degree of dimming of the lighting devices at the central area or of the lighting devices at the periphery area according to the collected information. Therefore, the lighting system 1 can perform the gradation control which effectively reduces a sense of insecurity and loneliness of a user according to a state of a place where the lighting system 1 is installed.

In addition, the lighting system 1 changes the number of lighting devices at the periphery area according to the collected information. Therefore, the lighting system 1 can perform the gradation control which effectively reduces the sense of insecurity and loneliness of a user according to a state of the place where the lighting system 1 is installed.

### Other embodiments

The above-mentioned lighting system 1 may be implemented in various different forms other than the above embodiment. Thus, various modification examples of the above-mentioned lighting system 1 will be described in the following.

### Performance agent of processing

In the above-described example, an example is described in which the host device 3 includes the collection unit 16, the determination unit 17, and the control unit 18, collects information on a place where the lighting system 1 is installed, and performs the gradation control according to the collected information. However, embodiments are not limited thereto. That is, the lighting system 1 may exhibit the above-mentioned function by making the lighting devices 9 and 10 perform a portion of processing.

For example, the host device 3 collects information on a place where the lighting system 1 is installed, and distributes the collected information to each of the lighting devices 9 and 10 as a parameter. Then, each of the lighting devices 9 and 10 may perform the gradation control according to the distributed parameter.

For example, the host device 3 includes the collection unit 16 and the determination unit 17. In this case, the collection unit 16 collects information on a place where the lighting system 1 is installed. In addition, the determination unit 17 specifies dimming data to use among the dimming data stored in the gradation control data 14 based on the information collected by the collection unit 16. Then, the determination unit 17 distributes the specified dimming data to each of the lighting devices 9 and 10.

On the other hand, the lighting device 9 stores the dimming data received from the host device 3. Moreover, the lighting device 9 monitors a signal line which connects between each of the lighting devices 9 and 10 and the host device 3, and obtains a control signal on a lighting device adjacent to the lighting device 9. Then, when obtaining a control signal which instructs turning-on of a lighting device adjacent to the lighting device 9, the lighting device 9 specifies the degree of dimming correlated with the degree of dimming set for the lighting device adjacent to the lighting device 9 from the dimming data received from the host device 3. Afterward, the lighting device 9 turns on the LED 21 at the specified degree of dimming.

In this manner, the lighting device 9 can receive the dimming data received from the host device 3, and perform the gradation control according to a control signal on other lighting devices and the received dimming data.

Moreover, in other examples, the lighting device 9 stores the gradation control data 14. Furthermore, the host device 3 determines dimming data to use from the collected information, and notifies each of the lighting devices 9 and 10 of the determined dimming data. In this case, the lighting device 9 reads the dimming data notified by the host device 3 from the gradation control data 14, and performs the gradation control using the read dimming data.

For example, each processing described above is realized by the microcomputer 23 included in the lighting device 9. That is, the microcomputer 23 may perform the above-mentioned processing by exhibiting the same function as the control unit 18 shown in Fig. 6. Moreover, the microcomputer 23 may include the gradation control data 14, the determination unit 17, and the control unit 18, receive information collected by the host device 3, and select dimming data according to the received information to perform the gradation control according to the selected dimming data.

In this manner, the lighting system 1 collects information on a place where the lighting system 1 is installed, and if it is possible to perform the gradation control according to the collected information, any device may perform each processing.

### Gradation control

In the above-mentioned first embodiment, the lighting system 1 changes the degree of dimming set for the lighting devices at the periphery area and the number of the lighting devices at the periphery area according to the collected information. However, the embodiment is not limited thereto.

For example, the lighting system 1 may change the color of a light emitted by the lighting devices at the periphery area according to the time zone and the brightness of an external light. For example, the lighting system 1 may set the color of a light of the lighting devices at the periphery area to be a daylight color or a cool white in the time zone of evening, and set the color of the light of the illuminance devices at the periphery area to a bulb color in the time zone of nighttime. In addition, the lighting system 1 may change the color of the light of the lighting devices at the periphery area according to the illuminance information, the information on the number of people, the layout information, and the like.

In the first embodiment, the lighting system 1 performs the gradation control which changes illuminance of the periphery area according to the time zone and the brightness of an external light, or the gradation control which changes the number of the lighting devices at the periphery area. However, the embodiment is not limited thereto. For example, the lighting system 1 may change the illuminance of the periphery area according to the time zone and the brightness of an external light, and change the number of the lighting devices at the periphery area.

Moreover, the lighting system 1 determines only whether to perform the gradation control or not, and may not perform a change in the illuminance of the periphery area and a change in the number of lighting devices at the periphery area according to the time zone and the illuminance. That is, the lighting system 1 determines whether or not to perform the gradation control which controls lighting devices around the lighting devices which are turned on at the predetermined degree of dimming, and when determining to perform the gradation control, the lighting system 1 may perform the gradation control.

### Processing using a plurality of illuminance sensors

In the above-mentioned first embodiment, the lighting system 1 installs the illuminance sensor 8 in the vicinity of a window, thereby collecting the illuminance information which indicates the brightness of an external light. However, the embodiment is not limited thereto. For example, the window in the vicinity of the illuminance sensor 8 is closed using blinds and the like, or when a reflected light or a light of the lighting device falls on the illuminance sensor 8, there is a case where the illuminance sensor 8 cannot exactly obtain the brightness of an external light.

Thus, the lighting system 1 may include a plurality of illuminance sensors installed in different positions, and perform the gradation control based on the illuminance of an external light measured by each illuminance sensor. For example, the lighting system 1 may perform the gradation control according to a difference between the illuminance measured by an illuminance sensor installed in a room and the illuminance measured by an illuminance sensor installed outside the room or in the vicinity of the window.

That is, when the blinds and the like are closed, a difference between the illuminance measured by the illuminance sensor installed in the vicinity of a window and the illuminance measured by the illuminance sensor installed in the room becomes small. Thus, the lighting system 1 may perform the gradation control when a difference between the illuminance measured by the illuminance sensor installed in the vicinity of the window and the illuminance measured by the illuminance sensor installed in the room is smaller than a predetermined threshold, and when the illuminance measured by the illuminance sensor installed in the vicinity of the window is darker than a predetermined threshold.

In addition, in other examples, the lighting system 1 may perform the gradation control according to an average value of the illuminance measured by each illuminance sensor, a position where each illuminance sensor is installed, and the like. In this manner, the lighting system 1 collects the illuminance information from a plurality of illuminance sensors installed in different positions, and performs the gradation control according to a plurality of pieces of collected illuminance information. Therefore, the lighting system 1 can perform a more effective gradation control.

### Dimming data

In the above-mentioned first embodiment, the lighting system 1 sets the degree of dimming of the lighting devices at the periphery area using the dimming data stored in the gradation control data 14. However, the embodiment is not limited thereto. For example, the host device 3 may calculate the degree of dimming set for the lighting devices at the periphery area using a predetermined equation which sets information on a place where the lighting system 1 is installed such as the degree of dimming set for the lighting devices at the central area, time information, illuminance information, information on the number of people, layout information as a parameter.

In addition, the host device 3 collects various types of parameters and distributes the collected parameters to each of the lighting devices 9 and 10. Then, the lighting device 9 may calculate the degree of dimming of the lighting device 9 from the received parameters and the degree of dimming set for an adjacent lighting device, and allows the LED 21 to shine at the calculated degree of dimming.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A lighting system (1) which includes a plurality of lighting devices (9 and 10), and a control device (3) controlling the lighting devices (9 and 10), the system comprising:
a collection unit (16) configured to collect information according to the any place; and
a control unit (18) configured to perform, according to information collected by the collection unit, a peripheral control which turns on a second lighting device installed on the periphery of a first lighting device instructed to be turned on at a degree of dimming which is lower than the degree of dimming of the first lighting device.

2. The system (1) according to claim 1,
wherein the collection unit (16) collects time information which indicates a time in a place where the lighting system (1) is installed, and
the control unit (18) performs the peripheral control according to the time information collected by the collection unit (16).

3. The system (1) according to claim 1 or 2,
wherein the collection unit (16) collects illuminance information which indicates the brightness of an external light, and
the control unit (18) performs the peripheral control according to the illuminance information collected by the collection unit (16).

4. The system (1) according to any one of claims 1 to 3, further comprising:
a plurality of measurement units (8) which measure illuminance of different places,
wherein the collection unit (16) collects illuminance information which indicates the illuminance measured by each measurement unit, and
the control unit (18) performs the peripheral control according to a plurality of pieces of illuminance information collected by the collection unit (16).

5. The system (1) according to any one of claims 1 to 4,
wherein the collection unit (16) collects information on the number of people which indicates the number of people in a region where the first lighting device is installed, and
the control unit (18) performs the peripheral control according to the information on the number of people collected by the collection unit (16).

6. The system (1) according to any one of claims 1 to 5,
wherein the collection unit (16) collects region information which indicates the size of a region where the first lighting device is installed, and
the control unit (18) performs the peripheral control according to the region information collected by the collection unit (16).

7. The system (1) according to any one of claims 1 to 6,
wherein the control unit (18) changes the degree of dimming of the first lighting device or the second lighting device according to the information collected by the collection unit (16).

8. The system (1) according to any one of claims 1 to 7,
wherein the control unit (18) changes the number of the second lighting devices, which are to be turned on, according to the information collected by the collection unit (16).

9. A method of controlling lighting devices (9 and 10) which is performed by a lighting system (1) including a plurality of lighting devices (9 and 10), and a control device that controls the lighting device, the method comprising:
collecting information according to the any place; and
performing, according to the collected information, a peripheral control which turns on a second lighting device installed on the periphery of a first lighting device instructed to be turned on at a degree of dimming which is lower than the degree of dimming of the first lighting device.

10. The method according to claim 9, wherein processing of collecting information is processing which collects time information that indicates the time in a place where the lighting system (1) is installed, and
the processing of performing the peripheral control is processing which performs the peripheral control according to the collected time information.

11. The method according to claim 9 or 10,
wherein the processing of collecting the information is processing which collects illuminance information that indicates the brightness of an external light, and
the processing of performing the peripheral control is processing which performs the peripheral control according to the collected illuminance information.

12. The method according to any one of claims 9 to 11,
wherein the processing of collecting the information is processing which collects illuminance information that indicates illuminance measured by a plurality of measurement units (8) that measure the illuminance of different places; and
the processing of performing the peripheral control is processing which performs the peripheral control according to a plurality of pieces of collected illuminance information.

13. The method according to any one of claims 9 to 12,
wherein the processing of collecting the information is processing which collects information on the number of people that indicates the number of people in a region where the first lighting device is installed, and
the processing of performing the peripheral control is processing which performs the peripheral control according to the collected information on the number of people.

14. The method according to any one of claims 9 to 13,
wherein the processing of collecting the information is processing which collects region information that indicates the size of a region where the first lighting device is installed, and
the processing of performing the peripheral control is processing which performs the peripheral control according to the collected region information.

15. The method according to any one of claims 9 to 14,
wherein the processing of performing the peripheral control is processing which changes the degree of dimming of the first lighting device or the second lighting device according to the collected information.
